# EUROPÄISCHE PATENTSCHRIFT

(11) **EP 4 286 722 B1**
(45) Veröffentlichungstag und Bekanntmachung des Hinweises auf die Patenterteilung: **12.08.2026**
(21) Anmeldenummer: 22176399.8
(22) Anmeldetag: 31.05.2022
(51) Int. Cl.: F16K 35/02

(54) **ARRETIERBARE VERRIEGELUNG**
LOCKABLE LOCKING DEVICE
VERROUILLAGE POUVANT ÊTRE BLOQUÉ

(43) Veröffentlichungstag der Anmeldung: 06.12.2023
(73) Patentinhaber: Georg Fischer Rohrleitungssysteme AG, 8201 Schaffhausen (CH)
(72) Erfinder: Wasetzki, Maxim, 78224 Singen (DE); Cantoni, Flavio, 8212 Neuhausen (CH)
(74) Vertreter: Fenner, Seraina

(56) Entgegenhaltungen:
- US-A- 5 188 335

## Beschreibung

Die Erfindung betrifft eine Vorrichtung zum Arretieren eines Drehgriffs eines Ventils, vorzugsweise eines Drehventils, speziell bevorzugt eines Kugelventils oder einer Absperrklappe beinhaltend, einen Griff zum Betätigen eines Absperrorgans eines Ventils, einen, an einem Ventilgehäusesupport für eine Betätigungsvorrichtung, verdrehsicher anordenbarer Rastring und einen an einem Antriebszapfen eines Absperrorgans fixier- und wiederlösbar anordenbaren Adapter, wobei der Adapter und der Griff wiederlösbar miteinander verbunden sind.

Drehventile, vor allem Absperrklappen weisen meist einen zweiteiligen Hebel auf, der beim Betätigen aus einer arretierenden Verzahnung gekippt wird und es dadurch ermöglicht wird, die Klappe im Gehäuse zu drehen. Wird der Hebel dann nicht mehr betätigt, greift die Verzahnung am Hebel wieder in eine Verzahnung am Gehäuse oder einer starren Scheibe ein, um die Absperrklappe in dieser Position zu arretieren. Solche Hebel sind meist für grosse Absperrklappen geeignet und lassen sich nicht für kleine kompakte Ventile einsetzen. Zudem sind solche Hebel meist fest mit der Drehachse der Klappe verbunden.

Die US 2009/0261280 A1 offenbart ein Kugelventil mit einem Griff und einem zusätzlich montierbaren Verrieglungselement. Das Verrieglungselement kann in jeder beliebigen Stellung des Kugelventils angebracht werden und verhindert die Veränderung im Öffnungsgrad des Ventils. Nachteilig hierbei ist der zusätzliche Aufwand der betrieben werden muss, um dieses Verrieglungselement anzubringen sowie dass es auch als separates Teil ausgebildet ist und daher gerne verloren geht. Zudem kann auch der Hebel selbst verloren gehen aufgrund des fehlenden Verriegelungsmechanismus.

Die US 5188335 offenbart ein Kugelventil mit einer verschliessbaren Sichungsvorrichtung.

Es ist Aufgabe der Erfindung eine Vorrichtung vorzuschlagen, mit welcher die Position eines Ventils arretiert werden kann und bei der der Griff in der arretierten Position nicht vom Ventil entfernbar ist.

Diese Aufgabe wird erfindungsgemäss dadurch gelöst, dass ein am Griff axial verschiebbarer und nicht drehbarer Schiebering am Griff angeordnet ist, wobei der Schiebering axial in eine Blockier- oder Offenstellung verschiebbar ist und in der Blockierstellung der Schiebering die Drehbewegung des Griffs arretiert und durch die Position des Schieberings in der Blockierstellung der Griff vom Ventil nicht entfernbar ist.

Die erfindungsgemässe Vorrichtung zum Arretieren eines Drehgriffs eines Ventils, bezieht sich vorzugsweise auf ein Drehventil. Darunter fallen Ventile, die ein drehbares Absperrorgan aufweisen, das über eine Drehachse betätigt wird und in der Regel 90 bis 180 Grad drehbar ist, wobei die Drehachse meist rechtwinklig oder leicht geneigt zur Strömungsrichtung angeordnet ist. Als bevorzugte Ventile, bei denen eine erfindungsgemässe Vorrichtung zum Arretieren eines Drehgriffs eingesetzt wird, gelten Kugelventile oder Absperrklappen. Die erfindungsgemässe Vorrichtung zum Arretieren eines Drehgriffs beinhaltet einen Griff zum Betätigen eines Absperrorgans eines Ventils. Wobei der Griff vorzugsweise einen Hals und einen Greifkörper aufweist. Zudem beinhaltet die erfindungsgemässe Vorrichtung einen Rastring, wobei der Rastring verdrehsicher an einem Ventilgehäusesupport für eine Betätigungsvorrichtung anordenbar ist. Der Rastring ist vorzugsweise formschlüssug am Gehäusesupport angeordnet. Zudem ist es vorteilhaft, wenn der Rastring kodiert ist, wodurch sie nur in einer Position am Gehäuse befestigt werden kann. Die erfindungsgemässe Vorrichtung beinhaltet zudem einen Adapter, wobei der Adapter der Zapfenverlängerung dient und der Adapter derart ausgebildet ist, dass er am Antriebszapfen des Absperrorgans anordenbar ist. Der Adapter ist fixierbar und auch wiederlösbar am Antriebszapfen angeordnet. Der Antriebszapfen eines Absperrorgans kann selbstverständlich auch durch das Ende einer durchgehenden Drehachse gebildet werden. Der Griff mit dem Adapter ist ebenfalls wiederlösbar verbunden. Vorzugsweise ist der Adapter und der Griff ohne Werkzeug wiederlösbar miteinander verbunden. Um die Funktionen der Arretierung und des nicht entfernbaren Griffs in arretierter Position umzusetzen, weist die erfindungsgemässe Vorrichtung einen Schiebering auf, wobei der Schiebering am Griff angeordnet ist, vorzugsweise am Hals des Griffs. Der Schiebering ist axial entlang des Griffs parallel zur Drehachse des Ventils in eine Blockierstellung und eine Offenstellung verschiebbar. In der Blockierstellung blockiert der Schiebering den Griff, so dass er nicht mehr drehbar ist und die Position des Absperrorgans dadurch arretiert ist. Zudem kann der Griff in dieser Position des Schieberings nicht vom Ventil entfernt werden bzw. in axialer Richtung entlang der Drehachse nicht abgezogen werden.

Vorzugsweise greift in der Blockierstellung des Schieberings, eine Verzahnung am Schiebering mit einer Verzahnung am Rastring ineinander, wobei die Verzahnungen eine Arretierung der Drehbewegung des Griffs gewährleisten. Durch das Verschieben des Schieberings in die Offenstellung greifen die Verzahnungen des Schieberings und des Rastrings nicht mehr ineinander und der Griff ist wieder drehbar.

Als bevorzugte Ausführungsform hat sich gezeigt, wenn die Verzahnung am Schiebering in einem dem Rastring zugewandten Bereich des Schieberings angeordnet ist und der Schiebering in der Blockierstellung mit der Verzahnung am Rastring greift. Dadurch, dass die Verzahnung zumindest im unteren Bereich des Schieberings angeordnet ist und die Verzahnung am Rastring eine geringe Breite aufweist, benötigt es auch nur wenig Hub um den Schiebering aus dem Eingriff mit der Verzahnung dem Rastring zu lösen.

Erfindungsgemäß weist der Adapter ein Fixierungselement auf, durch das der Adapter am Antriebszapfen wiederlösbar fixiert ist. Der Adapter ist am Antriebszapfen des Ventils wiederlösbar angeordnet und axial wie auch radial fixiert. Wobei zur radialen Fixierung vorzugsweise ein Formschluss zwischen Adapter und Antriebszapfen vorliegt. Zur axialen Fixierung dient das Fixierungselement, welches elastisch ausgebildet ist. Das Fixierungselement ist am Adapter angeordnet und greift beim Aufschieben auf den Antriebszapfen in eine Aussparung am Antriebszapfen ein, wodurch der Adapter wiederlösbar fixiert ist.

Erfindungsgemäß ist vorgesehen, dass der Griff ein weiteres Fixierungselement aufweist durch das der Griff am Adapter wiederlösbar fixiert ist. Das weitere Fixierungselement am Griff ist elastisch ausgebildet und greift beim Aufschieben des Griffs auf den Adapter in eine Aussparung oder Vertiefung ein und fixiert dadurch den Griff in axialer Richtung. Vorzugsweise weisen der Zapfen des Adapters und die Aufnahmen des Griffs in die der Zapfen eingeschoben wird einen Formschluss auf, wodurch sie radial zueinander fixiert sind.

Vorzugsweise sind die Fixierungselemente mit dem Schiebering in der Blockierstellung derart arretiert, dass der Griff nicht vom Ventil abnehmbar ist. Durch die Position des Schieberings in der Blockierstellung sind die Fixierungselemente blockiert und können sich nicht mehr elastisch verformen, da sie vom Schiebering blockiert sind. Es ist vorteilhaft, wenn dazu eine Stützlasche am Schiebering angeordnet ist. Wobei die Stützlasche konzentrisch zu den Fixierungselementen nach aussenhin versetzt angeordnet ist und diese in ihrer Flexibilität blockiert.

Erfindungsgemäß ist vorgesehen, dass die Fixierungselemente als Schnappverbindungen ausgebildet sind. Dies ermöglicht das elastische Einschnappen in eine Aussparung oder Vertiefung und, dass die Verbindung wieder gelöst werden kann. Steht nun der Schiebering in der Blockerstellung, wird die Möglichkeit des Schnappens bzw. des elastischen Ausschwenkens des Fixierungselements unterdrückt. Vorzugsweise werden die Fixierungselemente durch die Stützlaschen am Schiebering blockiert.

Vorzugsweise ist die Verzahnung am Innendurchmesser des Schieberings und am Aussendurchmesser des Rastrings angeordnet. Als vorteilhaft hat sich auch gezeigt, wenn die Verzahnung am Rastring zumindest über einen Viertel des Umfangs des Rastrings verläuft und die Verzahnung am Schiebering durch mindestens einen Zahn gebildet werden. Wobei auch eine umgekehrte Ausführung ebenso vorstellbar ist. Als weitere vorteilhafte Ausführungsform hat sich auch gezeigt, wenn mehr Zähne vorzugsweise in regelmässigen Abständen am Innendurchmesser des Schieberings angeordnet sind.

Es ist vorteilhaft, wenn amRastring eine Skala zur Bestimmung des Öffnungsgrads des Ventils angeordnet ist.

Vorzugsweise ist der Schiebering in der Blockierstellung axial nach unten und in der Offenstellung axial nach oben verschoben. Das heisst, der Schiebering ist in der Blockierstellung unten und in der Offenstellung oben am Hals des Griffs angeordnet.

Es ist vorteilhaft, wenn der Schiebering in der Blockierstellung abschliessbar ausgebildet. Dadurch kann gewährleistet werden, dass der Schiebering nicht von Unbefugten betätigt wird. Vorteilhaft ist es, wenn der Schiebering dazu eine Öse oder eine Art Haken aufweist, um ein Sicherheitsschloss daran zu befestigen, was eine Verschiebung des Schieberings in die Offenstellung verunmöglicht.

Vorzugsweise sind die Elemente Griff, Adapter, Rastring und Schiebering der erfindungsgemässen Vorrichtung alle durch blosses Zusammenstecken miteinander wiederlösbar verbunden und am Ventil wiederlösbar befestigt. Es bedarf keiner weiteren Befestigungselemente.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: zeigt eine dreidimensionale Ansicht eines Ventils mit der erfindungsgemässen Vorrichtung,
- Fig. 2: eine Explosionszeichnung der erfindungsgemässen Vorrichtung,
- Fig. 3: eine Schnittansicht der erfindungsgemässen Vorrichtung in Blockierstellung,
- Fig. 4: eine Schnittansicht der erfindungsgemässen Vorrichtung in Offenstellung und
- Fig. 5: den Adapter und der Rastring am Ventil montiert.

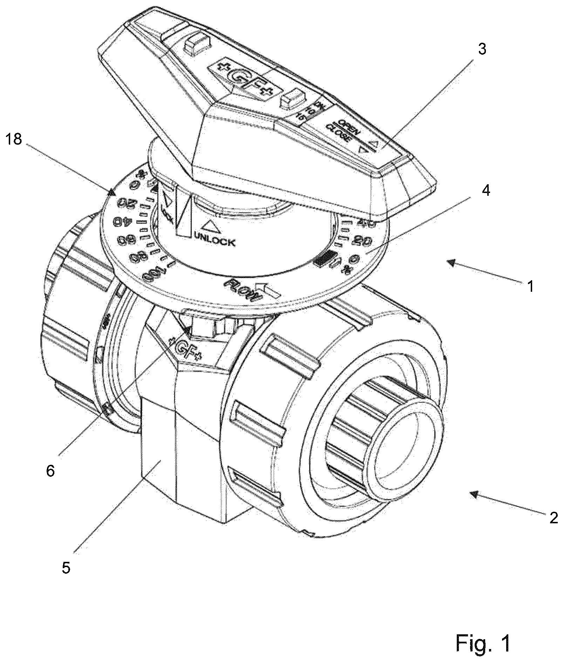

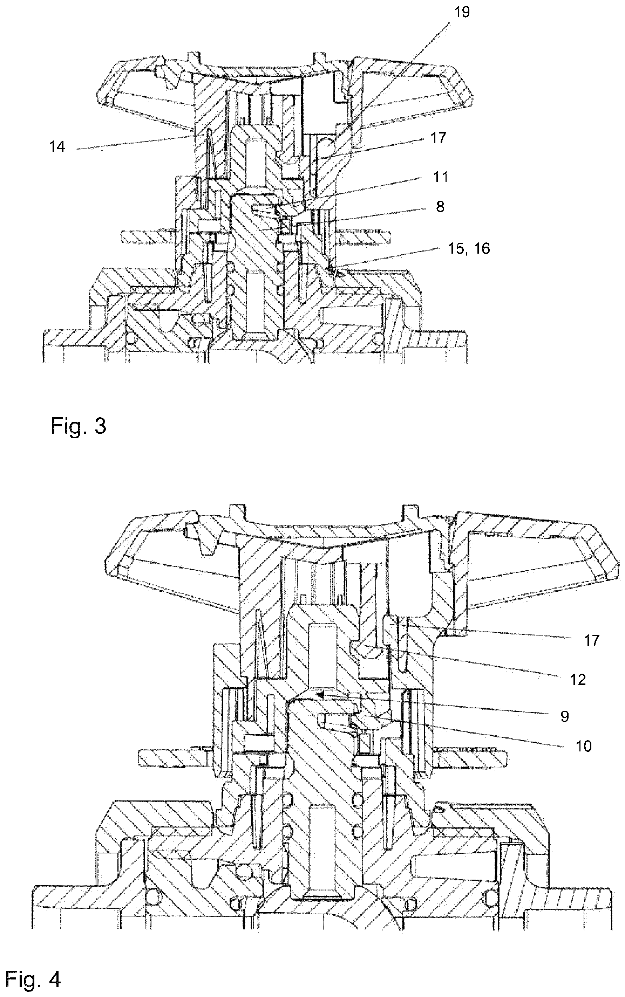

Die in Fig. 1 dargestellte Zeichnung zeigt eine dreidimensionale Abbildung eines Kugelventils mit einer erfindungsgemässen Vorrichtung 1 zum Arretieren eines Drehgriffs eines Ventils 2 bzw. dessen Absperrorgan. Die erfindungsgemässe Vorrichtung 1 beinhaltet einen Griff 3 zum Betätigen des Absperrorgans. Zudem weist die erfindungsgemässe Vorrichtung 1 einen Rastring 4 auf, die am Ventilgehäuse 5 formschlüssig angeordnet ist. Der Rastring 4 ist am Ventilgehäusesupport 6 angeordnet, der der Aufnahme einer Betätigungsvorrichtung dient. Der Rastring 4 wird ausschliesslich durch Aufstecken befestigt und es werden keine separaten Befestigungsmittel benötigt. Der Rastring 4 weist eine Indexierung auf, wodurch sie nur in einer Position montiert werden kann. Des Weiteren beinhaltet die erfindungsgemässe Vorrichtung 1 einen Adapter 7, gut ersichtlich in Fig. 5. Der Adapter 7 wird am Antriebszapfen 8 des Ventils 2 angeordnet. Zur radialen Fixierung zwischen dem Adapter 7 und dem Antriebszapfen 8 dient ein Formschluss, das heisst der Antriebszapfen 8 wird in einer Senkung 9 im Adapter 7 formschlüssig aufgenommen. Zur axialen Fixierung, welche wiederlösbar ist dient ein Fixierelement 10. Diese ist vorzugsweise als Schnappverbindung ausgebildet. Fig. 5 zeigt deutlich, wie das Fixierelement 10 in die Aussparung 11 am Antriebszapfen 8 hineinragt. Auch in den Fig. 3 und 4 ist das gut ersichtlich. Der Griff 3 ist ebenfalls mit einem Fixierelement 12 wiederlösbar mit dem Adapter 7 gekoppelt. Auch hier wird dazu vorzugsweise eine Schnappverbindung umgesetzt. Gut ersichtlich ist in Fig. 3 der zur erfindungsmässen Vorrichtung 1 gehörende Schiebering 13, dargestellt in der Blockierstellung, welcher am Griff 3 angeordnet ist und in axialer Richtung verschiebbar ist. Der Schiebering 13 ist am Hals 14 des Griffes 3 angeordnet und lässt sich von unten in der Blockierstellung in die obenliegende Offenstellung verschieben, welche in Fig. 4 ersichtlich ist. Die erfindungsgemässe Vorrichtung 1 mit den beinhaltenden Elementen Griff 3, Adapter 7, Rastring 4 und Schiebering 13 ist alle durch blosses Zusammenstecken miteinander verbunden und am Ventil 2 befestigt. Es bedarf keiner weiteren Befestigungselemente. In der Blockierstellung greift die Verzahnung 16 des Schieberings 13 in die Verzahnung 15 des Rastrings 4, wodurch die Drehbewegung des Griffs 3 blockiert wird, bzw. die Position des Ventils 2 und dessen Absperrorgan arretiert ist. Zudem blockiert der Schiebering 13 die Fixierelemente 10, 12 was gut aus Fig. 3 ersichtlich ist. Die Fixierelemente 10, 12 können durch die Stützlasche 17, welche sie in ihrer Bewegungsfreiheit blockiert, nicht mehr elastisch verformen und kurzeitig verschieben, wodurch der Griff 3 wie auch der Adapter 7 nicht vom Ventil 2 abgezogen werden können. Die Schnappverbindungen werden so vom Schiebering 13 blockiert.

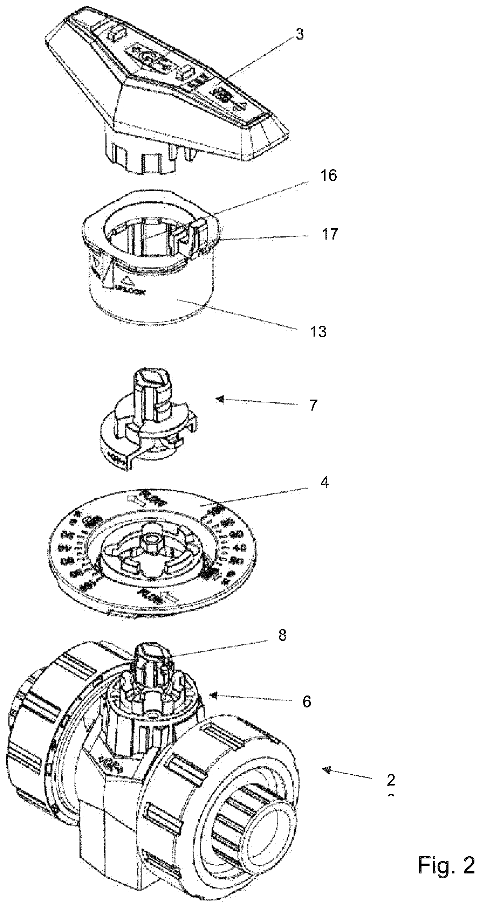

Fig. 5 zeigt die Verzahnung 15 am Rastring 4, welche zumindest einen Viertel des Umfangs des Rastrings 4 umgibt, bevorzugt aber den kompletten Umfang. In Fig. 2 ist die Verzahnung 16 am Innendurchmesser des Schieberings 13 zu erkennen, die mindestens einen Zahn beinhaltet aber vorzugsweise aus mehreren regelmässig beanstandeten Zähnen gebildet ist.

Vorzugsweise weist der Rastring 4 eine Skala 18 auf, die anzeigt, wie der Öffnungsgrad des Ventils 2 ist.

In Fig. 3 ist gut ersichtlich, dass es vorteilhaft ist, wenn der Schiebering eine Lasche oder Öse 19 aufweist oder die Lasche am Schiebering 13 mit dem Griff 3 eine Öse bildet um ein Sicherheitsschloss daran anzubringen. Dadurch ist gewährleistet, dass in Blockierstellung keine unberechtigte Person den Schiebering 13 in die Offenstellung verschieben kann und das Ventil 2 verstellen oder den Griff 3 vom Ventil 2 abziehen kann.

### Bezugszeichenliste

- 1: Vorrichtung
- 2: Ventil
- 3: Griff
- 4: Rastring
- 5: Ventilgehäuse
- 6: Ventilgehäusesupport
- 7: Adapter
- 8: Antriebszapfen
- 9: Senkung
- 10: Fixierungselement
- 11: Aussparung
- 12: Fixierungselement
- 13: Schiebering
- 14: Hals
- 15: Verzahnung Rastring
- 16: Verzahnung Schiebering
- 17: Stützlasche
- 18: Skala
- 19: Lasche/Öse

## Patentansprüche

1. Vorrichtung (1) zum Arretieren eines Drehgriffs eines Ventils (2), vorzugsweise eines Drehventils, speziell bevorzugt eines Kugelventils oder einer Absperrklappe beinhaltend, einen Griff (3) zum Betätigen eines Absperrorgans eines Ventils (2), einen, an einem Ventilgehäusesupport (6) für eine Betätigungsvorrichtung verdrehsicher anordenbaren Rastring (4) und einen ein Fixierungselement (10) aufweisenden Adapter (7), der an einem Antriebszapfen (8) eines Absperrorgans mittels des Fixierungselements (10) fixier- und wiederlösbar anordenbar ist, wobei der Adapter (7) und der Griff (3) mittels eines weiteren zum Griff (3) gehörenden Fixierungselements (12) wiederlösbar miteinander verbunden sind, wobei ein axial verschiebbarer und nicht drehbarer Schiebering (13) am Griff (3) angeordnet ist, wobei der Schiebering (13) axial in eine Blockier- oder Offenstellung verschiebbar ist und in der Blockierstellung der Schiebering (13) die Drehbewegung des Griffs (3) arretiert und durch die Position des Schieberings (13) in der Blockierstellung der Griff (3) vom Ventil (2) nicht entfernbar ist, **dadurch gekennzeichnet dass** die Fixierungselemente (10, 12) als Schnappverbindungen ausgebildet sind,.

2. Vorrichtung (1) nach Anspruch 1, **dadurch gekennzeichnet, dass** in der Blockierstellung des Schieberings (13), eine Verzahnung (16) am Schiebering (13) mit einer Verzahnung (15) am Rastring (4) ineinandergreift, wobei die Verzahnungen (15, 16) eine Arretierung der Drehbewegung des Griffs (3) gewährleistet.

3. Vorrichtung (1) nach einem der Ansprüche 1 oder 2, **dadurch gekennzeichnet, dass** die Verzahnung (16) am Schiebering (13) in einem dem Rastring (4) zugewandten Bereich des Schieberings (13) angeordnet ist und der Schiebering (13) in der Blockierstellung mit der Verzahnung (15) an des Rastrings (4) greift und den Griff arretiert.

4. Vorrichtung (1) nach einem der Ansprüche 1 bis 3, **dadurch gekennzeichnet, dass** die Fixierungselemente (10, 12) mit dem Schiebering (13) in der Blockierstellung derart arretiert sind, dass der Griff (3) nicht vom Ventil (2) abnehmbar ist.

5. Vorrichtung (1) nach einem der Ansprüche 1 bis 4, **dadurch gekennzeichnet, dass** die Verzahnung (15, 16) am Innendurchmesser des Schieberings (13) und am Aussendurchmesser des Rastrings (4) angeordnet ist.

6. Vorrichtung (1) nach einem der Ansprüche 1 bis 5, **dadurch gekennzeichnet, dass** am Rastring (4) eine Skala (18) zur Bestimmung des Öffnungsgrads des Ventils (2) angeordnet ist.

7. Vorrichtung nach einem der Ansprüche 1 bis 6, **dadurch gekennzeichnet, dass** der Schiebering (13) in der Blockierstellung axial nach unten und in der Offenstellung axial nach oben verschoben ist.

8. Vorrichtung (1) nach einem der Ansprüche 1 bis 7, **dadurch gekennzeichnet, dass** der Schiebering (13) abschliessbar ausgebildet ist.

## Claims

1. Device (1) for locking a turning handle of a valve (2), preferably of a rotary valve, especially preferably of a ball valve or a shut-off valve, containing a handle (3) for actuating a shut-off element of a valve (2), a latching ring (4) that can be arranged in a rotationally conjoint manner on a valve housing support (6) for an actuating device, and an adapter (7) that has a fixing element (10) and can be arranged on a drive journal (8) of a shut-off element such that it can be fixed and released again by means of the fixing element (10), wherein the adapter (7) and the handle (3) are connected to one another such as to be releasable again by means of a further fixing element (12) belonging to the handle (3), wherein an axially displaceable and non-rotatable sliding ring (13) is arranged on the handle (3), wherein the sliding ring (13) can be displaced axially into a locking or open position and in the locking position the sliding ring (13) locks the rotational movement of the handle (3) and the handle (3) cannot be removed from the valve (2) on account of the position of the sliding ring (13) in the locking position, **characterized in that** the fixing elements (10, 12) are designed as snap-action connections.

2. Device (1) according to Claim 1, **characterized in that** when the sliding ring (13) is in the locking position, a toothing (16) on the sliding ring (13) meshes with a toothing (15) on the latching ring (4), wherein the toothings (15, 16) guarantee that the turning movement of the handle (3) is locked.

3. Device (1) according to one of Claims 1 or 2, **characterized in that** the toothing (16) is arranged on the sliding ring (13) in a region of the sliding ring (13) facing the latching ring (14), and the sliding ring (13) meshes with the toothing (15) on the latching ring (4) in the locking position and locks the handle.

4. Device (1) according to one of Claims 1 to 3, **characterized in that** the fixing elements (10, 12) are locked when the sliding ring (13) is in the locking position, in such a manner that the handle (3) cannot be removed from the valve (2).

5. Device (1) according to one of Claims 1 to 4, **characterized in that** the toothing (15, 16) is arranged on the inner diameter of the sliding ring (13) and on the outer diameter of the latching ring (4).

6. Device (1) according to one of Claims 1 to 5, **characterized in that** a scale (18) for determining the degree of aperture of the valve (2) is arranged on the latching ring (4).

7. Device according to one of Claims 1 to 6, **characterized in that** the sliding ring (13) is displaced axially downwardly in the locking position and axially upwardly in the open position.

8. Device (1) according to one of Claims 1 to 7, **characterized in that** the sliding ring (13) has a closable design.

## Revendications

1. Dispositif (1) destiné à bloquer une poignée tournante d'une soupape (2), de préférence d'une soupape rotative, plus particulièrement d'une soupape sphérique ou d'un clapet d'obturation, comprenant une poignée (3) destinée à actionner un organe d'obturation d'une soupape (2), une bague à crans (4) pouvant être disposée sans possibilité de rotation sur un support de corps de soupape (6) pour un dispositif d'actionnement, et un adaptateur (7) présentant un élément de fixation (10), lequel peut être disposé sur un tourillon d'entraînement (8) d'un organe d'obturation au moyen de l'élément de fixation (10) de manière à pouvoir être fixé et à nouveau détaché, l'adaptateur (7) et la poignée (3) étant reliés l'un à l'autre de manière à pouvoir être à nouveau détachés au moyen d'un autre élément de fixation (12) appartenant à la poignée (3), une bague coulissante (13) déplaçable axialement et non rotative étant disposée sur la poignée (3), la bague coulissante (13) pouvant être déplacée axialement dans une position de blocage ou d'ouverture et, dans la position de blocage, la bague coulissante (13) bloquant le mouvement de rotation de la poignée (3), et la position de la bague coulissante (13) dans la position de blocage empêchant le retrait de la poignée (3) de la soupape (2), **caractérisé en ce que** les éléments de fixation (10, 12) sont réalisés sous la forme de liaisons par encliquetage.

2. Dispositif (1) selon la revendication 1, **caractérisé en ce que**, dans la position de blocage de la bague coulissante (13), une denture (16) sur la bague coulissante (13) s'engrène avec une denture (15) sur la bague à crans (4), les dentures (15, 16) garantissant un blocage du mouvement de rotation de la poignée (3).

3. Dispositif (1) selon l'une des revendications 1 ou 2, **caractérisé en ce que** la denture (16) sur la bague coulissante (13) est disposée dans une zone de la bague coulissante (13) tournée vers la bague à crans (4) et, dans la position de blocage, la bague coulissante (13) s'engrène avec la denture (15) sur la bague à crans (4) et bloque la poignée.

4. Dispositif (1) selon l'une des revendications 1 à 3, **caractérisé en ce que** les éléments de fixation (10, 12) sont bloqués par la bague coulissante (13) dans la position de blocage de telle sorte que la poignée (3) ne peut pas être retirée de la soupape (2).

5. Dispositif (1) selon l'une des revendications 1 à 4, **caractérisé en ce que** la denture (15, 16) est disposée sur le diamètre intérieur de la bague coulissante (13) et sur le diamètre extérieur de la bague à crans (4).

6. Dispositif (1) selon l'une des revendications 1 à 5, **caractérisé en ce qu'**une échelle graduée (18) destinée à déterminer le degré d'ouverture de la soupape (2) est disposée sur la bague à crans (4).

7. Dispositif selon l'une des revendications 1 à 6, **caractérisé en ce que** la bague coulissante (13) est déplacée axialement vers le bas dans la position de blocage et axialement vers le haut dans la position d'ouverture.

8. Dispositif (1) selon l'une des revendications 1 à 7, **caractérisé en ce que** la bague coulissante (13) est conçue de manière à pouvoir être verrouillée.
